# EUROPÄISCHE PATENTANMELDUNG

(11) **EP 0 766 482 A2**
(43) Veröffentlichungstag der Anmeldung: **02.04.1997**
(21) Anmeldenummer: 96113135.6
(22) Anmeldetag: 16.08.1996
(51) Int. Cl.: H04Q 1/14

(54) **Verteilereinrichtung für die Telekommunikations- und Datentechnik**

(30) Priorität: 29.09.1995 DE 19537529; 29.09.1995 DE 29515983 U; 29.09.1995 DE 29515984 U
(71) Anmelder: KRONE Aktiengesellschaft, D-14167 Berlin (DE)
(72) Erfinder: Dohnke, Ingo, Dipl.-Ing., 14513 Teltow (DE); Hegner, Gunter, 13509 Berlin (DE); Richter, Gerd, 14167 Berlin (DE)

(57) **Zusammenfassung**

Die Erfindung betrifft eine Verteilereinrichtung für die Telekommunikations- und Datentechnik, insbesondere für den Hauptverteiler von Fernsprech- und Datenleitungen, mit Schneid-Klemm-Kontaktelementen zum Anschluß sowohl der Teilnehmer- als auch der Vermittlungskabel, mit im Inneren der modular aufgebauten Verteilerleiste angeordneten einstückig ausgebildeten Kontaktfedern, einen Montagebügel, insbesondere zur Aufnahme von Verteilerleisten, bestehend aus einer u-förmigen Wanne, eine Einrichtung zur Führung von Kabeln, die in einem Teilbereich drehend bewegt werden, mit Kabelführungen.

Die Aufgabe der Erfindung, eine Verteilereinrichtung der gattungsgemäßen Art so weiterzuentwickeln, daß eine Reduzierung der Baugröße, eine Verbesserung der Beschaltungsarbeiten, der einzelne Schutz der Doppeladern, eine zuverlässige Erdung sowie eine weitgehend knick- und biegebeanspruchungsfreie Kabelführung gewährleistet werden, wurde dadurch gelöst, daß die im Inneren der Verteilerleiste 1 angeordneten einstückigen Kontaktfedern 2 aus Anschlußkontakten in Schneid-Klemm-Technik 9,13 auf der Vorder- und Rückseite der Leiste 1, aus einem Fernmeldekontakt 10 im mittleren Bereich gebildet sind, wobei der Fernmeldekontakt 10 aus mindestens zwei Kontaktflächen 14,15, die als Doppelkontakte ausgebildet sein können, und aus einer Abstützfläche 16 besteht, auf die eine mit dem jeweiligen Vorderteil des Ober- und Unterteils 4,3 der Leiste 1 einstückig verbundene Zunge 17 mit einem Nocken 18 einwirkt, und daß ein Abgreifkontakt 12 im vorderen Bereich der Kontaktfeder 2 ausgebildet ist.

Der Montagebügel 25 enthält im Wannengrund 40 Kontaktlaschen 39 zur Herstellung einer elektrisch leitenden und einer mechanischen Verbindung und Öffnungen 45 zum Stecken von Schutzsteckern oder dgl..

Die Einrichtung zur Kabelführung enthält an einem Gestellrahmen 48 oder dgl. fest angeordnete Kabelführungen 49, die zu den an dem schwenkbaren Montagebügel 25 angeordneten Kabelführungen 47 nach oben oder nach unten versetzt angeordnet sind.

## Beschreibung

Die Erfindung bezieht sich auf eine Verteilereinrichtung für die Telekommunikations- und Datentechnik, insbesondere für den Hauptverteiler von Fernsprech- und Datenleitungen gemäß den Oberbegriffen der Ansprüche 1,5 und 7.

Derartige Verteilereinrichtungen, insbesondere für den Hauptverteiler von Fernsprechanlagen, dienen als Schnittstelle für die Teilnehmer- und Vermittlungsstellen von Fernsprechanlagen.

Aus der DE 43 06 349 C1 ist eine Verteilereinrichtung, insbesondere für den Hauptverteiler von Fernsprech- und Datenleitungen bekannt, der aus einer Mehrzahl von Verteilerleisten mit auf der Anschlußseite angeordneten Kontaktelementen zum Anschluß sowohl der Teilnehmer- als auch der Vermittlungskabel, mit von der Betriebsdienstseite her an die im Inneren der Verteilerleisten angeordneten Kontaktelemente anschließbaren Steckern, gebildet ist und bei der im Inneren der Verteilerleisten in nebeneinander angeordneten Verteilerbauelementen Kontaktelemente eingebracht sind, die zwei Trennstellen und einen Aufschaltekontakt auf der Betriebsdienstseite und zwei Aufschaltekontakte auf der rückwärtigen Anschlußseite bilden. Die Kontaktelemente im Inneren jedes Verteilerbauelementes bilden mit einer Doppelader des Vermittlungskabels und des Teilnehmerkabels einen geschlossenen Leitungsweg, welcher über die vorne liegende Betriebsdienstseite über übereinander angeordnete Öffnungen mittels Stecker manipuliert wird.

Nachteilig ist es bei dieser Verteilereinrichtung, daß eine komplizierte Kontaktgestaltung mit vielen Einzelteilen die Ausbildung des Schaltmittels erschwert. Darüber hinaus muß auch jede Rangier- und Schutzfunktion durch Stecker realisiert werden.

In der DE-P 44 23 339.6 wird zur Behebung dieser Nachteile eine Verteilereinrichtung mit modular aufgebauten Verteilerleisten vorgeschlagen, die Kabelabschlußmodule mit integriertem Überspannungsschutz bilden. Die Kontaktelemente im Inneren der Verteilerleisten sind aus einer einstückigen Kontaktfeder mit einem Anschlußkontakt auf der Anschlußseite und einem weiteren Anschlußkontakt auf der Betriebsdienstseite, mit einem Fernmeldekontakt im mittleren Bereich und aus einer Kontaktfläche zur Kontaktierung mit einem Überspannungsschutz gebildet.

Zur Bildung von zwei Kontaktstellen sind mindestens drei Kontaktelemente notwendig, die einen verhältnismäßig großen Platzbedarf haben und eine weitere Reduzierung der Baugröße der Verteilereinrichtung verhindern.

Zur Aufnahme der Verteilerleisten der Verteilereinrichtung sind Montagebügel bekannt, die aus einer U-förmigen Wanne mit kammförmig geschlitzten Seitenwänden zur Aufnahme von Drahtführungseinsätzen bestehen. Die Drahtführungseinsätze sind über Rasthaken in die Seitenwände eingebracht. In die jeweils dazwischenliegenden Räume sind Kontakteinsätze eingeführt, die mit den Drahtführungseinsätzen verrasten. Die Montagebügel weisen an der Kabelseite für jeden Kontakteinsatz Öffnungen auf, in die Einschübe mit Überspannungsableitern gesteckt werden können. Es werden dadurch alle Doppeladern eines Kontakteinsatzes gleichzeitig geschützt. Wenn im Betriebsdienst ein Überspannungsableiter-Einschub zur Überprüfung herausgezogen wird, dann kann eine Beeinflussung auf allen Leitungen des Einschubes erfolgen. Zur Weiterleitung des Erdpotentials vom Einschub zum Gestell werden Erdungs-Kontaktfedern benutzt, die an der Rückwand des Montagebügels angeordnet sind (Produktprogramm der KRONE AG, Katalog, HVt 71-Geräte, Übersicht).

Aus der DE 32 01 894 ist eine Aufnahmeleiste bekannt, die aus drei Teilleisten besteht, welche übereinander auf mit Zungen versehenen wannenförmigen Aufnahmevorrichtungen aufgerastet sind. Bei diesem System ist die kleinste Funktionsgruppe zehn Doppelader-Anschlüsse. Insofern entspricht diese Aufnahmevorrichtung dem oben angeführten bekannten Montagebügel mit den beschriebenen Nachteilen.

Die Organisation der Kabelwege zu den Verteilerleisten einer Verteilereinrichtung erfolgt bekannterweise entsprechend der Verteileranordnung nach dem DE-G 93 02 456.8 derart, daß das an den Verteiler herangeführte Teilnehmerkabel und das an den Verteiler herangeführte Systemkabel waagerecht an die Verteilermodule geführt sind.

Die Organisation der Kabelwege erfolgt im Zusammenhang mit den schwenkbaren Profilrahmen für die Module im wesentlichen ebenfalls in einer Ebene. Die Kabel werden in u-förmige Aufnahmen eingelegt und mittels Clips fixiert. Beim Herausschwenken der Profilrahmen unterliegen die Kabel im wesentlichen einer Knick- und Biegebeanspruchung. Es wird ein relativ hoher Kraftaufwand zum Bewegen des Rahmens benötigt, wenn viele Kabel eingebracht sind. Die Kabelführung wird schwierig, wenn viele Kabel zugeführt werden müssen, z.B. Rangierkabel.

Der Erfindung liegt von daher die Aufgabe zugrunde, eine Verteilereinrichtung so weiterzuentwickeln, daß eine Reduzierung der Baugröße der Verteilerleisten und eine Verbesserung der Beschaltungsarbeiten gewährleistet werden, daß die Doppeladern einzeln geschützt werden können und eine zuverlässige Erdung auch ohne zusätzliche Erdungs-Kontaktfeder und eine übersichtliche und eine Knick- und Biegebeanspruchung der Kabel weitgehend vermeidende Kabelführung gewährleistet werden.

Die Lösung dieser Aufgabe ergibt sich aus den Merkmalen des Anspruches 1. Durch den modularen Aufbau der Verteilerleiste entsprechend den benötigten Funktionen mit der darin angeordneten in besonders günstiger Weise ausgestalteten Kontaktfeder wird ein geringerer Platzbedarf erreicht. Es werden zur Bildung von zwei Kontaktstellen anstelle von bisher drei nur noch zwei Kontaktelemente benötigt und damit eine höhere Packungsdichte beim Aufbau eines Hauptverteilers oder anderer Verteilereinrichtungen bzw. eine hohe Anschaltdichte pro m² erreicht. Dadurch wird eine weitere Reduzierung der Baugröße von Verteilereinrichtungen bei weiterer Verringerung der Kosten pro Anschluß einer Doppelader erreicht, wobei alle Arbeiten des Betriebsdienstes von einer Seite des Gestelles mit der Verteilereinrichtung erledigt werden können und diese unkompliziert aufgebaut ist.

Die Miniaturisierung der Verbindungsleiste hat eine Verringerung der Anzahl der Übergangswiderstände zur Folge und eine Verringerung der Störanfälligkeit.

Es wird eine volle Flexibilität bei Umschaltungen im gesamten Netz insbesondere auch durch die Benutzung der gleichen Bauteile im gesamten Leitungsnetz erreicht. Die Schaltmittel sind einfacher und damit kostengünstiger in der Herstellung gestaltet. Die gesamte Verkabelung kann neben dem direkten Anschalten auch durch Stecken erfolgen. Änderungen sind schnell und wirtschaftlich durchführbar.

Durch die Anordnung von Öffnungen in der Rückwand (Wannengrund) des Montagebügels zum Stecken von Schutzsteckern oder dgl. durch die Herausformung von Kontaktlaschen wird erreicht, daß die bisher notwendigen Erdungs-Kontaktfedern wegfallen können. Die Funktion der Erdungs-Kontaktfedern wird durch die zu steckenden Überspannungsschutz-Stecker erfüllt. Es wird dadurch gleichzeitig der Schutz einzelner Doppeladern möglich sowie im Betriebsdienst die Beeinflussung von Nachbaradern in einer Verteilerleiste vermieden.

An dem schwenkbaren Montagebügel sind die Kabelführungen fest angeordnet und stehen mit den Kabelführungen, die an einem am Gestell fest montierten Rahmen angeordnet sind, über die zuzuführenden Kabel in einer Wirkverbindung. Die an dem schwenkbaren Montagebügel angeordneten Kabelführungen sind zu den fest angeordneten Kabelführungen nach unten oder nach oben versetzt angeordnet. Die Kabel sind zwischen den Kabelführungen am schwenkbaren Montagebügel oder dgl. und den Kabelführungen am feststehenden Rahmen schräg geführt, wobei der Grad der Schrägführung vom Durchmesser der zu führenden Kabel abhängig gewählt ist.

Beim Schwenken der Kabelführung unterliegen die schräg geführten Kabel im wesentlichen einer Torsionsbelastung innerhalb ihres elastischen Bereiches. Die Kabelbelastung ist wesentlich geringer als bei den bekannten Kabelführungen in einer Ebene. Die zum Schwenken des Montagebügels benötigte Kraft ist herabgesetzt. Es wird eine bessere Organisation der Kabelwege im Zusammenhang mit schwenkbaren Rahmen/Aufnahmen oder dgl. erreicht.

Die Erfindung ist nachfolgend anhand von in den Zeichnungen dargestellten Ausführungsbeispielen von Verteilerleisten, Montagebügel und einer Vorrichtung zur Kabelführung näher erläutert. Es zeigen:
- Fig. 1: eine perspektivische Darstellung einer Verteilerleiste in Schaltkontaktstellung,
- Fig. 2: eine Schnittdarstellung der Verteilerleiste nach Fig. 1 mit Trennstecker,
- Fig. 3: eine Schnittdarstellung der Verteilerleiste nach Fig. 2 mit Überspannungsschutz,
- Fig. 4: eine Schnittdarstellung der Verteilerleiste gemäß der Fig. 1 mit Überspannungsschutz,
- Fig. 5: eine Schnittdarstellung einer Verteilerleiste in Trennkontaktstellung,
- Fig. 6: eine Schnittdarstellung der Verteilerleiste nach Fig.5 mit Trennstecker,
- Fig. 7: eine Schnittdarstellung der Verteilerleiste nach Fig. 6 mit Überspannungsschutz,
- Fig. 8: eine Schnittdarstellung der Verteilerleiste nach Fig. 5 mit Überspannungsschutz,
- Fig. 9: die Draufsicht auf eine Kontaktfeder, wie sie in den Verteilerleisten gemäß den Fig. 1 bis 8 verwendet ist,
- Fig.10: die Seitenansicht (Schnittdarstellung) der Kontaktfeder nach Fig. 9,
- Fig.11: die Draufsicht auf das Vorderteil eines Ober- oder Unterteils einer Verteilerleiste (Ausschnitt),
- Fig.12: eine Schnittdarstellung durch das Vorderteil gemäß der Fig. 11 und
- Fig.13: die Draufsicht auf das Rückteil eines Ober- oder Unterteiles einer Verteilerleiste (Ausschnitt),
- Fig. 14: eine perspektivischer Darstellung eines Montagebügels,
- Fig. 15: eine perspektivische Darstellung eines mit Verteilerleisten bestückten Montagebügels und
- Fig. 16: eine perspektivischer Darstellung der Einrichtung zur Führung von Kabeln.

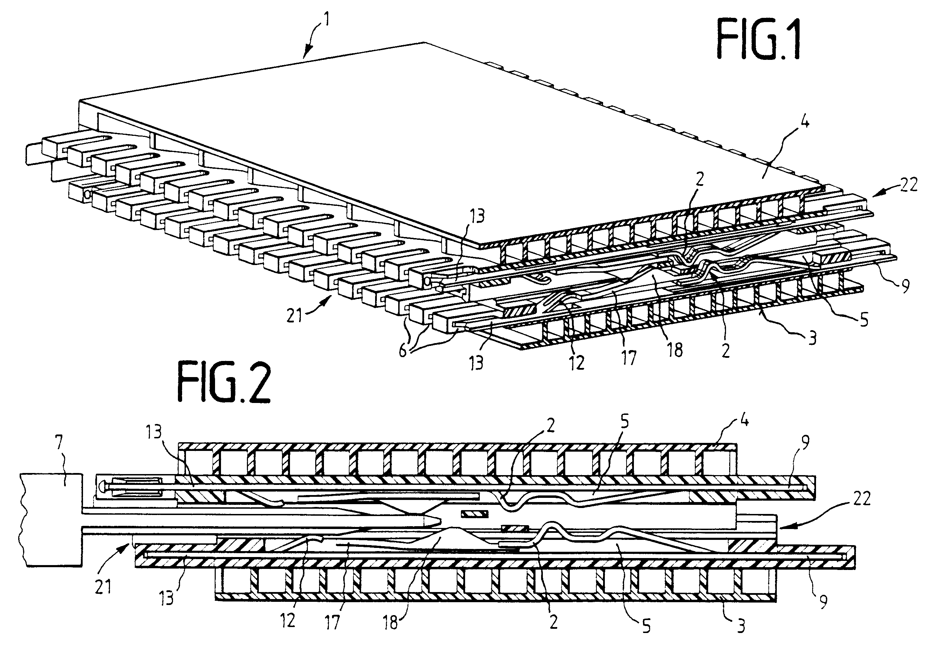

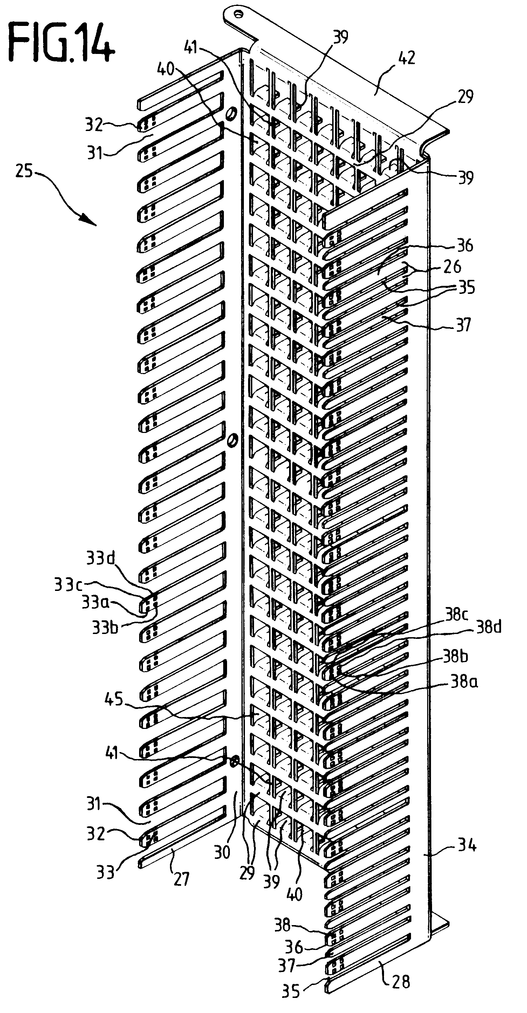

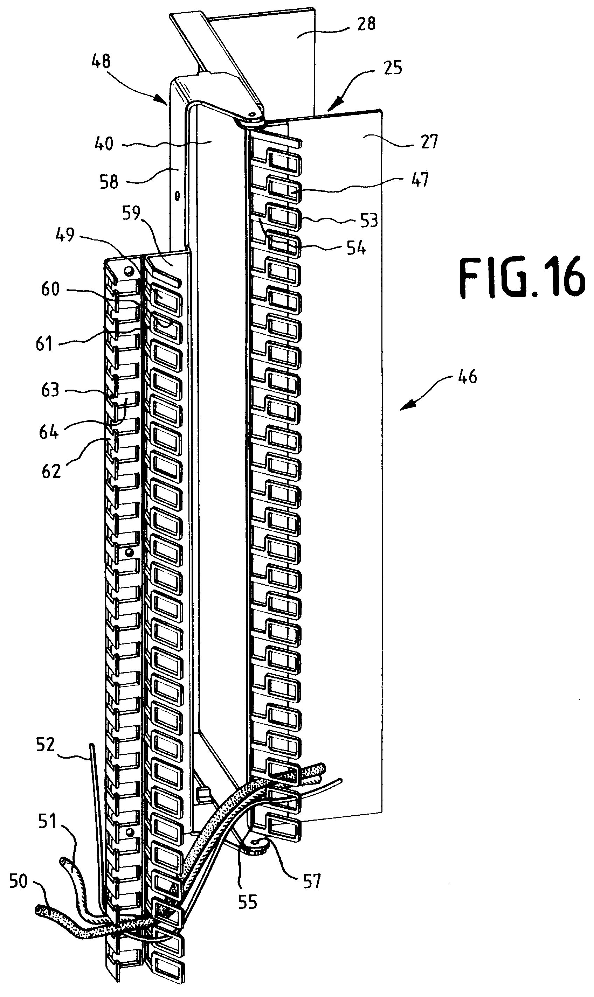

Zum Aufbau eines Hauptverteilers in Telekommunikations- und Datennetzen werden Verteilerleisten 1 gemäß den Fig. 1 bis 8 in senkrechten Blöcken in Montagebügeln 25 nach Fig. 14 übereinander angeordnet, wobei zur Kabelführung eine Vorrichtung nach Fig. 16 verwendet wird.

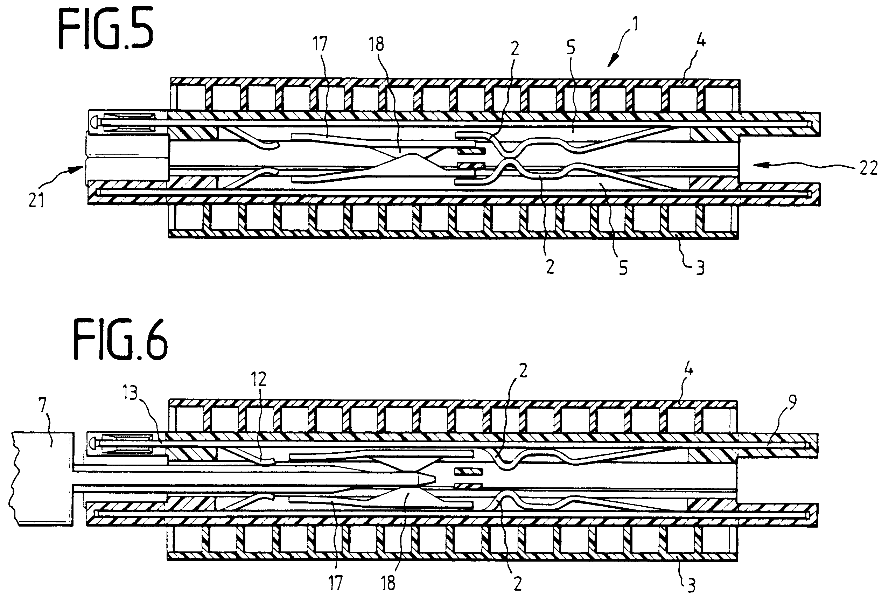

Jede Verteilerleiste 1 bildet ein Funktionsmodul, z.B. in Schaltkontaktstellung nach Fig. 1, in Trennkontaktstellung nach Fig. 5.

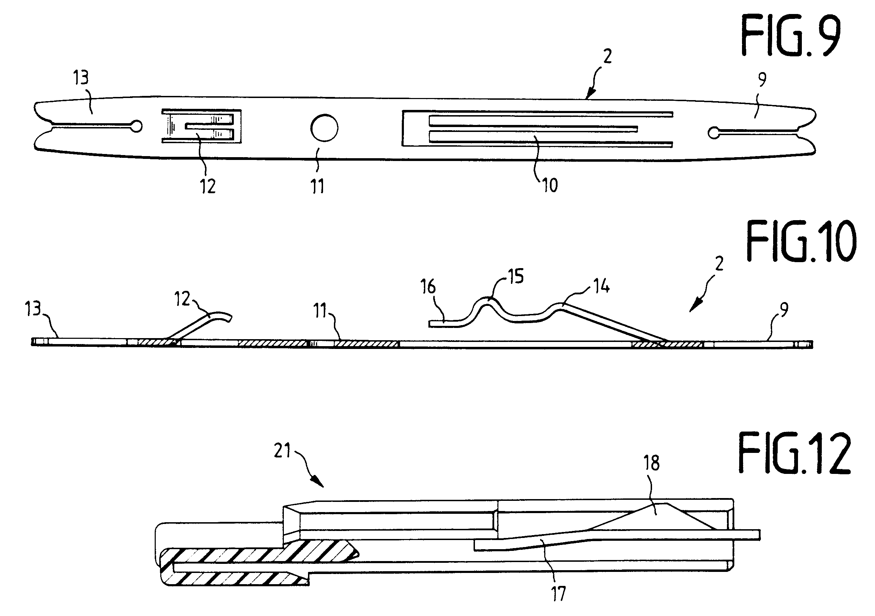

Die Verteilerleisten 1 bestehen aus gleichen Bausteinen und unterscheiden sich nur in der Stellung bzw. der Anordnung von Kontaktfedern 2 nach den Fig. 9 und 10 sowie in der Beschaltung mit einem oder ohne einen Überspannungsschutz-Stecker 8 oder dgl..

Jede Verteilerleiste 1 besteht aus zwei baugleichen Segmenten mit Kammern 5 und Schlitzen 6, die übereinandergeschoben ein Unterteil 3 und ein Oberteil 4 der Verteilerleiste 1 bilden, wobei in den Kammern 5 jeweils eine Kontaktfeder 2 eingebracht ist (Fig.1,12,13,9,10).

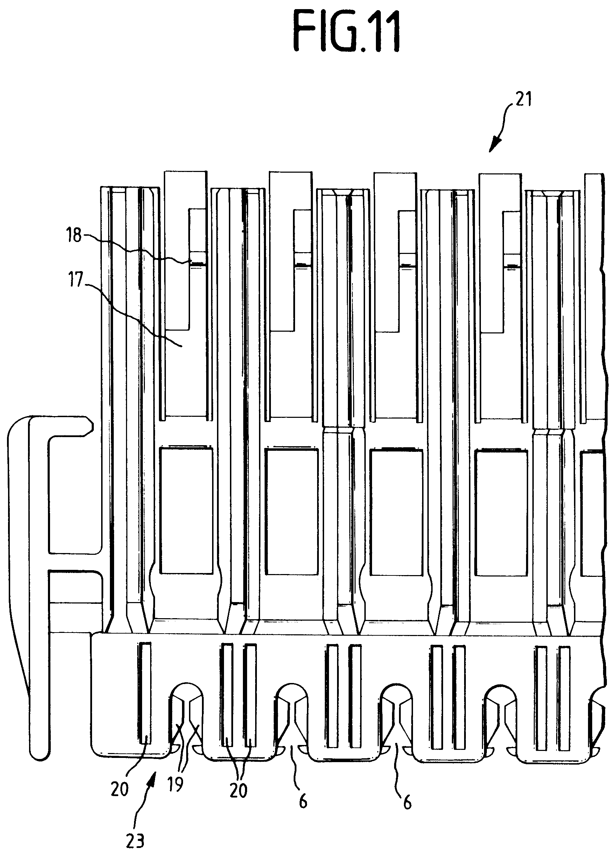

Jedes Unterteil 3 bzw. Oberteil 4 weist ein Vorderteil 21 gemäß Fig. 11 und ein Rückteil 22 gemäß Fig. 13 auf, in welche die Schlitze 6 zur Aufnahme von vorderen und hinteren Schneid-Klemm-Kontakten 13,9 der Kontaktfedern 2 (Fig. 9,10) eingebracht sind.

Im Kontaktbereich 23 der Schneid-Klemm-Kontakte 9,13 sind Klemmstege 19 vorgesehen, die in Wirkverbindung mit dahinterliegenden Schlitzen 20 stehen. Die Klemmstege 19 und Schlitze 20 gewährleisten, daß die anzuschaltenden Drähte (nicht dargestellt) mit ihrer Isolierung so festgehalten werden, daß sie auch bei starker Vibrationsbelastung nicht gelöst und aus dem Kontakt herausrutschen.

Jeder Leitungsweg, gebildet aus einer Doppelader, ist einzeln schützbar. An jede Verteilerleiste 1 können acht Doppeladern angeschlossen werden, entweder in einem Hauptverteiler, oder auch in Kabelverzweigern und in der Übertragungstechnik.

Die einzelnen Segmente der Verteilerleiste 1 sind in der Art eines Steckers aufgebaut und können als solche im Kabelnetz oder Vermittlungssystem benutzt werden. Dadurch können am Kabelnetz oder in Vermittlungssystemen Änderungen durch Umstecken vorgenommen werden. Das Neubeschalten und Umrangieren wird unnötig. Jedes mit der Verteilerleiste 1 nach Fig. 1 bis 8 abgeschlossene Kabel kann schnell an jedes beliebige Gerät der Übertragungstechnik angesteckt werden.

Die einzelnen Kabeladern werden mit den hinteren oder den vorderen Anschlußkontakten 13,9 in Schneid-Klemm-Technik je nach Aufbau der Verteilereinrichtung wahlweise auf der Vorder- oder Rückseite der Verteilerleiste 1 angeschlossen. Über die in der Verteilerleiste 1 pro Ader im Ober- und im Unterteil 4,3 der Verteilerleiste 1 eingebrachten Kontaktfedern 2 werden sämtliche Schutz- und Schaltfunktionen realisiert.

Die Kontaktfeder 2 ist entsprechend der Darstellung in den Fig. 9 und 10 einstückig ausgeführt und wird aus einem hinteren Schneid-Klemm-Kontakt 9, einem Fernmeldekontakt 10, einem Aufnahmebereich 11 zur Fixierung im Ober- bzw. Unterteil 4,3 der Leiste 1, aus einem Abgreifkontakt 12 und aus einem vorderen Schneid-Klemm-Kontakt 13 gebildet.

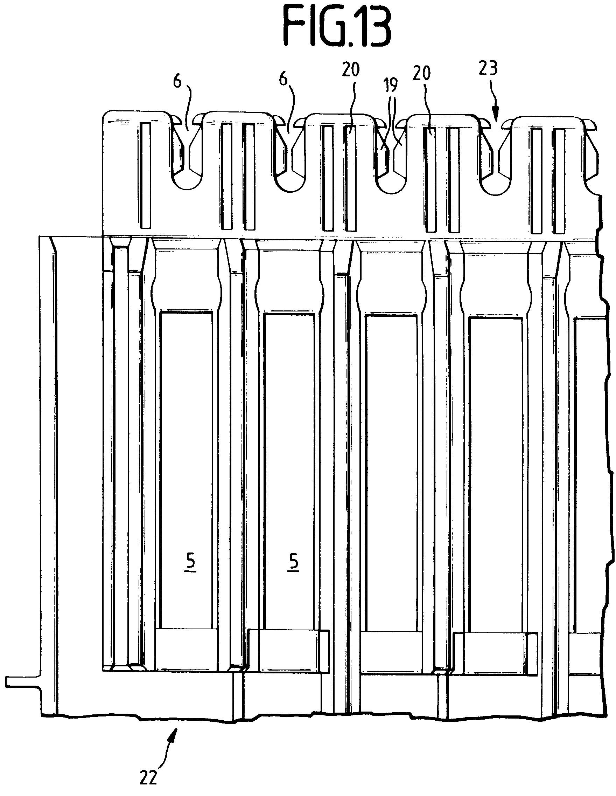

Der Fernmeldekontakt 10 ist aus dem hinteren bis mittleren Bereich der Kontaktfeder 2 herausgebogen und weist eine Kontaktfläche 14 zur Kontaktierung mit einem hier nicht dargestellten Überspannungsschutz, eine Kontaktfläche 15 und eine Abstützfläche 16 auf. Die Kontaktflächen 14,15 und die Abstützfläche 16 sind geschlitzt ausgeführt, um einen Doppelkontakt und damit eine noch höhere Sicherheit zu erreichen. Die Kontaktflächen 15 der Kontaktfedern 2 des Ober- und des Unterteils 4,3 stoßen zusammen und bilden zusammen den eigentlichen Fernmeldekontakt 24 der Verteilerleiste 1 (z.B. Fig. 5). Die Abstützfläche 16 des Fernmeldekontaktes 10 befindet sich in einem Wirkzusammenhang mit einer Zunge 17 mit einem Nocken 18, die einstückig und federnd jeweils mit dem Vorderteil 21 des Ober- und des Unterteils 4,3 verbunden ist (Fig. 12). Die Kontaktflächen 14,15 und die Abstützfläche 16 sind am Fernmeldekontakt 10 so ausgebildet, daß sie möglichst starr miteinander verbunden sind und dadurch eine sehr geringe Durchbiegung der Kontaktfeder 2 im vorderen Bereich erfolgt, wenn die Zunge 17 mit Nocken 18 die Abstützfläche 16 des Fernmeldekontaktes 10 mit einem ausreichenden Druck belastet. Der Abgreifkontakt 12 ist für Meß- und Prüfzwecke vorgesehen.

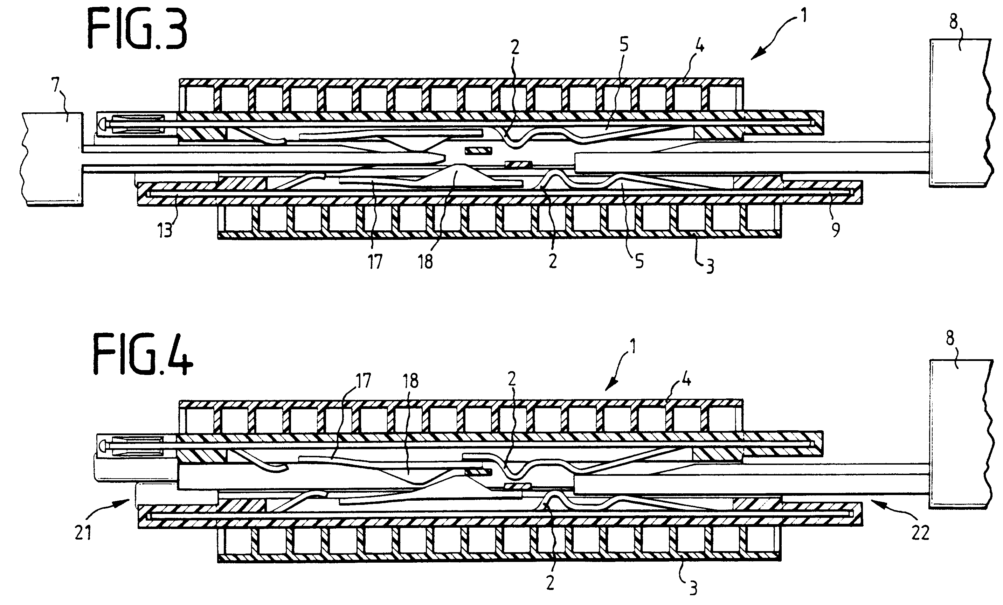

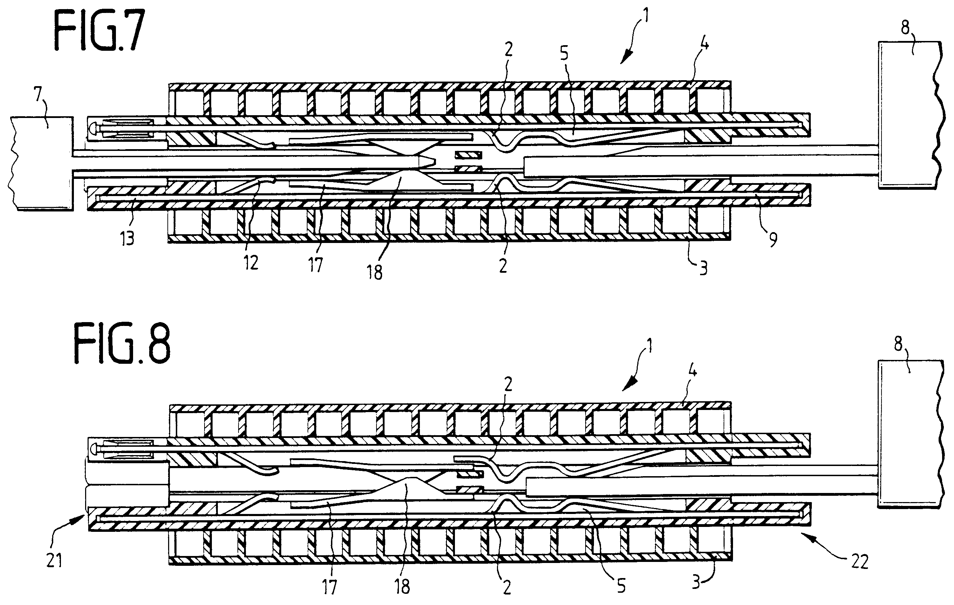

In die Verteilerleiste 1 kann der Überspannungsschutz-Stecker 8 (Fig. 4,8) für die jeweiligen Doppeladern eingesetzt werden, der über die Kontaktfläche 14 der Kontaktfeder 2 kontaktiert. Beim Stecken des Überspannungsschutz-Steckers 8 wird die Kontaktfeder 2 des linienseitigen Fernmeldekontaktes 10 im Unterteil 3 elastisch verformt, wodurch der eigentliche Fernmeidekontakt 24 (Fig. 5) geöffnet wird. Der Überspannungsschutz-Stecker 8 ist somit elektrisch zwischen dem Oberteil 4 und dem Unterteil 3 eingeschleift. Auch bei gestecktem Überspannungsschutz-Stecker 8 ist das Auftrennen des Strompfades durch einen Trennstecker 7, der auf den Nocken 18 über die Zunge 17 auf die Abstützfläche 16 und somit auch auf die Kontaktfläche 14 des Fernmeldekontaktes 10 des Oberteils 4 einwirkt, möglich (Fig. 3,7).

Ist in Ausnahmefällen eine Rangierung von einzelnen Doppeladern nötig, kann durch Stecken eines Trennsteckers 7 und Anschalten eines nicht dargestellten Rangierdrahtes entsprechend der Darstellung in den Fig. 2,3 an den Anschlußkontakt 9 oder 13 eine Verbindung hergestellt werden, die von der 1:1-Durchschaltung der Leiste 1 abweicht. Die Verteilerleisten 1 bieten die Möglichkeit, bis zu 100 % der angeschalteten Doppeladern zu rangieren.

Bei einem Aufbau als Hauptverteiler werden die Verteilerleisten 1 in ihrer Kombination als Verteilereinrichtung an einem Gestell mittels der in der Fig. 14 dargestellten Montagebügel 25 in senkrechten Blöcken in Buchten befestigt.

Im Kabelverzweiger können die gleichen Verteilerleisten 1 mit den beschriebenen Vorteilen verwendet werden.

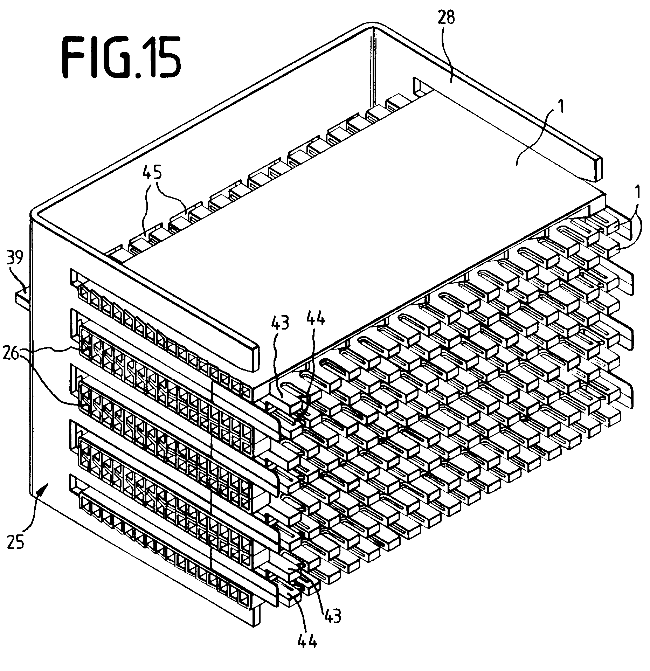

Entsprechend der Darstelung in der Fig. 14 besteht ein Montagebügel 25 aus beispielsweise fünfundzwanzig übereinanderliegenden baugleichen Funktionssegmenten 26 zur Einbringung von Verteilerleisten 1 (Fig.15), z.B. zur Bildung von senkrecht angeordneten Blöcken in Buchten zum Aufbau eines Hauptverteilers in der Telekommunikation- und Datentechnik.

Kammartig geschlitzte Seitenwände 27,28 sind über Stege 29 zu einer u-förmigen Wanne verbunden. Die Seitenwand 27 besteht aus einem Kammgrund 30, aus dem abwechselnd mit Schlitzen 31, Stege 32 mit vier Ausnehmungen 33 ausgeformt sind. Die Seitenwand 28 besteht ebenfalls aus einem Kammgrund 34, aus dem abwechselnd mit Schlitzen 35, alternierend Stege 36 mit vier Ausnehmungen 38 und Stege 37 ohne Ausnehmungen herausgeformt sind.

Die Stege 37 dienen der besseren Führung der einzubringenden Verteilerleisten 1. Auf der Seite der Seitenwand 27 bestehen breite Schlitze 31 zur Herausführung der nicht dargestellten Drähte. Hier werden demzufolge nicht die einzelnen Segmente 43, 44 der Verteilerleisten 1, sondern die Verteilerleisten 1 insgesamt geführt (Fig. 15).

Die Kammgründe 30, 34 sind über die Stege 29 miteinander verbunden. Die Stege 29 sind durch den Freischnitt von Kontaktlaschen 39 aus dem Wannengrund 40 gebildet. Die Kontaktlaschen 39 sind nach hinten herausgebogen, so daß weitere Stege 41 gebildet sind.

Die durch den Freischnitt der Kontaktlaschen 39 und deren Herausbiegen gebildeten Öffnungen 45 dienen zum Stecken nicht dargestellter Schutzstecker.

Zur Befestigung des Montagebügels 25, z.B. an einem nicht dargestellten Gestell, ist aus dem Wannengrund 40 eine Lasche 42 herausgebogen.

Jedes Funktionssegment 26 wird aus je einem Steg 32, einem Schlitz 31, einem Verbindungssteg 29 mit den Kontaktlaschen 39 und den zugehörigen Öffnungen 45, den zugehörigen Stegen 41 sowie einem Schlitz 35 und einem Steg 36 gebildet.

Die Ausnehmungen 33, 38 in den Stegen 32,36 dienen zum Einrasten der Verteilerleisten 1 (Fig. 15).

In der Fig. 15 ist die beispielhafte Bestückung des Montagebügels 25 schematisch dargestellt.

In jedes Funktionssegment 26 des Montagebügels 25 wird eine Verteilerleiste 1 eingebracht, wobei die Verteilerleisten 1 jeweils aus dem Segment 43 für den Kabelabschluß der Teilnehmerseite und aus dem Segment 44 für den Kabelabschluß der Systemseite bestehen. In der Fig. 15 sind vier Funktionssegmente 26 dargestellt, die Fig. 14 zeigt die Möglichkeit zur Aufnahme von fünfundzwanzig Funktionselementen 26.

Die Ausnehmungen 38 der Stege 36 und die Ausnehmungen 33 der Stege 32 sind jeweils übereinanderliegend angeordnet und erlauben zwei unterschiedliche Kontaktstellungen der Segmente 43, 44 der Verteilerleiste 1.

Wenn die beiden Segmente 43, 44 einer Verteilerleiste 1 jeweils übereinanderliegend in den gleichen Ausnehmungen 33,38 eingerastet sind, dann ist in der Verteilerleiste 1 ein Trennkontakt realisiert.

Wenn in der Fig. 14 beispielsweise eine Verteilerleiste 1 mit ihrem Segment 43 in die Ausnehmungen 38c/33c und mit ihrem Segment 44 in die Ausnehmungen 38d/33d eingerastet ist, dann liegt eine Trennkontaktstellung vor.

Wenn dagegen das Segment 43 der Verteilerleiste 1 in die Ausnehmungen 38c/33c und das Segment 44 in die Ausnehmungen 38b/33b einrastet, dann liegt eine Schaltkontaktstellung vor.

Der Montagebügel 25 ist schwenkbar ausgeführt (Fig. 16), um durch die Rückseite (Wannengrund 40) des Montagebügels 25 einen Schutz stecken zu können, z.B. einen nicht dargestellten Überspannungsschutz-Stecker. Der Überspannungsschutz-Stecker kontaktiert dabei mit seinen Kontaktzungen von hinten in die Kontakte der Verteilerleiste 1 und gleichzeitig die Kontaktlaschen 39, welche die elektrische Verbindung von einem nicht dargestellten Gestell zu den Kontakten der Verteilerleiste 1 über den Überspannungsschutz des Überspannungsschutz-Steckers herstellt und dadurch den Schutz jeder einzelnen Doppelader ermöglicht.

Die Fig. 16 zeigt in perspektivischer Darstellung eine Einrichtung zur Führung von Kabeln, wie sie in einem Hauptverteiler der Kommunikations- und Datentechnik zur Heranführung der Kabel an die Verteilereinrichtung geeignet ist.

Nach der Darstellung in der Fig. 16 besteht die Einrichtung 46 aus z.B. fünfundzwanzig Kabelführungen 47, die aus einem gestielten Rahmen 53 gebildet und mit ihrem Stiel 54 in einem Winkel von beispielsweise ca. 45° an eine Ecke 55 des schwenkbaren Montagebügels 25 (Fig. 14) für die in den Fig. 1 bis 8 dargestellten Verteilerleisten 1 angeordnet sind.

In der Fig. 16 sind die Wände 27,28,40 des Montagebügels 25 nach der Fig. 14 vereinfacht ohne die zur Aufnahme der Verteilerleisten 1 notwendigen Aussparungen dargestellt.

Der schwenkbare Montagebügel 25 ist über Drehpunkte 56,57 mit einem an einem nicht dargestellten Gestell fest montierten Rahmen 48 verbunden.

Der Rahmen 48 besteht im wesentlichen aus einer Schiene 58, aus der eine Abwinkelung 59 herausgeformt ist, an die fünfundzwanzig Kabelführungen 49 angebracht sind.

Die Kabelführungen 49 werden wiederum aus einem gestielten Rahmen 60, wobei die Stiele 61 und die Rahmen 60 zueinander einen Winkel von beispielsweise ca. 120° bilden, und aus Führungen 62 gebildet.

Die Führungen 62 bestehen aus einem Winkelteil mit Ausnehmungen 63,64. Die Kabelführungen 49 sind gegenüber den Kabelführungen 47 senkrecht versetzt angeordnet, hier um vier Kabelführungen nach unten.

Die zuzuführenden Kupferkabel 50,51,52 sind durch die Kabelführungen 49,47 schräg nach oben weisend in die nicht dargestellten Verteilerleisten im schwenkbaren Montagebügel 25 geführt.

Das gestellfeste Systemkabel 50 ist durch die Ausnehmung 63 der zweiten Führung 62 zwischen den zweiten und den dritten Rahmen 60 der Kabelführung 49 und von dort schräg nach oben zwischen den zweiten und den dritten Rahmen 53 der Kabelführung 47 zum nicht dargestellten Verteiler im schwenkbaren Montagebügel 25 geführt.

Das gestellfeste Teilnehmerkabel 51 ist parallel zum Systemkabel 50 geführt.

Die Rangierdrähte 52 sind durch den zweiten Rahmen 53 der Kabelführungen 47 und durch den zweiten Rahmen 60 der Kabelführungen 49 und über die Ausnehmung 64 der zweiten Führung 62 der Kabelführung 49 herausgeführt.

Durch die gewählte schräge Kabelführung werden beim Bewegen des Rahmens 48 weitgehend Knick- und Biegebeanspruchungen der Kabel 50,51,52 vermieden. Die bei der Drehbewegung auftretenden Torsionskräfte bleiben im Bereich der Elastizitätsgrenzen der Kabel 50,51,52.

Es ist die Zuführung einer Vielzahl von dünnen Kabeln unterschiedlicher Durchmesser möglich, ohne daß sich diese behindern.

Rangierdrähte 52 können ohne Schwierigkeit nach der Verlegung der System- und Teilnehmerkabel 50,51 geführt werden. Der Winkel, in welchem die Kabel 50,51,52 geführt werden, richtet sich nach deren Durchmesser.

Die Abwinkelung der Kabelführungen 47,49 kann auch rechtwinklig oder in einem beliebigen anderen Winkel oder auch gebogen erfolgen.

### BEZUGSZEICHENLISTE

- 1: Verteilerleiste
- 2: Kontaktfeder
- 3: Unterteil
- 4: Oberteil
- 5: Kammer
- 6: Schlitz
- 7: Trennstecker
- 8: Überspannungsschutz-Stecker
- 9: Schneid-Klemm-Kontakt
- 10: Fernmeldekontakt
- 11: Aufnahmebereich
- 12: Abgreifkontakt
- 13: Schneid-Klemm-Kontakt
- 14: Kontaktfläche
- 15: Kontaktfläche
- 16: Abstützfläche
- 17: Zunge
- 18: Nocken
- 19: Klemmsteg
- 20: Schlitz
- 21: Vorderteil
- 22: Rückteil
- 23: Kontaktbereich
- 24: eigentlicher Fernmeldekontakt
- 25: Montagebügel
- 26: Funktionssegment
- 27: Seitenwand
- 28: Seitenwand
- 29: Steg
- 30: Kammgrund
- 31: Schlitz
- 32: Steg
- 33: Ausnehmung
- 34: Kammgrund
- 35: Schlitz
- 36: Steg
- 37: Steg
- 38: Ausnehmung
- 39: Kontaktlasche
- 40: Wannengrund (Rückwand)
- 41: Steg
- 42: Lasche
- 43: Segment
- 44: Segment
- 45: Öffnung
- 46: Einrichtung
- 47: Kabelführung
- 48: Rahmen
- 49: Kabelführung
- 50: Systemkabel
- 51: Teilnehmerkabel
- 52: Rangierdraht
- 53: Rahmen
- 54: Stiel
- 55: Ecke
- 56: Drehpunkt
- 57: Drehpunkt
- 58: Schiene
- 59: Abwinkelung
- 60: Rahmen
- 61: Stiel
- 62: Führung
- 63: Ausnehmung
- 64: Ausnehmung

## Patentansprüche

1. Verteilerleiste für die Telekommunikations- und Datentechnik, insbesondere für den Hauptverteiler von Fernsprech- und Datenleitungen, mit Schneid-Klemm-Kontaktelementen zum Anschluß sowohl der Teilnehmer- als auch der Vermittlungskabel, mit im Inneren der modular aufgebauten Verteilerleiste angeordneten einstückig ausgebildeten Kontaktfedern,
**dadurch gekennzeichnet,** daß
die im Inneren der Verteilerleiste (1) angeordneten einstückigen Kontaktfedern (2) aus Anschlußkontakten in Schneid-Klemm-Technik (9,13) auf der Vorder- und Rückseite der Leiste (1), aus einem Fernmeldekontakt (10) im mittleren Bereich gebildet sind, wobei der Fernmeldekontakt (10) aus mindestens zwei Kontaktflächen (14,15), die als Doppelkontakte ausgebildet sein können, und aus einer Abstützfläche (16) besteht, auf die eine mit dem jeweiligen Ober- und Unterteil (4,3) der Leiste (1) einstückig verbundene Zunge (17) mit einem Nocken (18) einwirkt, und daß ein Abgreifkontakt (12) im vorderen Bereich der Kontaktfeder (2) ausgebildet ist.

2. Verteilerleiste nach Anspruch 1, dadurch gekennzeichnet, daß im Kontaktbereich der Schneid-Klemm-Kontakte (9,13) im jeweiligen Vorder- und Rückteil des Ober- und Unterteils (4,3) Klemmstege (19) in Verbindung mit dahinterliegenden Schlitzen (20) für den isolierten Teil der anzuschaltenden Drähte angeordnet sind.

3. Verteilerleiste nach Anspruch 1, dadurch gekennzeichnet, daß die Kontaktflächen (14,15) und die Abstützfläche (16) des Fernmeldekontaktes (10) möglichst starr miteinander verbunden sind und die Durchbiegung der Kontaktfeder (2) im Bereich der Anbindung der Kontaktfeder (2) erfolgt.

4. Verteilerleiste nach Anspruch 1, dadurch gekennzeichnet, daß ein Überspannungsschutz-Stecker (8) über die eine Kontaktfläche (14) der Kontaktfeder (2) kontaktiert und/oder daß ein Trennstecker (7) über die Zunge (17) auf die Abstützfläche (16) der Kontaktfeder (2) und auf den Nocken (18) einwirkt und den Strompfad unterbricht.

5. Montagebügel, insbesondere zur Aufnahme von Verteilerleisten der Kommunikations- und Datentechnik, bestehend aus einer u-förmigen Wanne, **dadurch gekennzeichnet, daß** im Wannengrund (40) Kontaktlaschen (39) zur Herstellung einer elektrisch leitenden Verbindung und Öffnungen (45) zum Stecken von Schutzsteckern oder dgl. vorgesehen sind.

6. Montagebügel nach Anspruch 5, dadurch gekennzeichnet, daß die Öffnungen (45) durch Herausbiegen der Kontaktlaschen (39) gebildet sind.

7. Einrichtung zur Führung von Kabeln, insbesondere von Kupfer-Kabeln in der Kommunikations- und Datentechnik, die in einem Teilbereich drehend bewegt werden, mit Kabelführungen, **dadurch gekennzeichnet, daß** die an einem Gestellrahmen (48) oder dgl. fest angeordneten Kabelführungen (49) zu den an einer schwenkbaren Aufnahme (25) angeordneten Kabelführungen (47) nach oben oder nach unten versetzt angeordnet sind.

8. Einrichtung nach Anspruch 7, dadurch gekennzeichnet, daß die Kabel (50,51,52) von den fest angeordneten Kabelführungen (49) zu den an der schwenkbaren Aufnahme (25) angeordneten Kabelführungen (47) schräg geführt sind.

9. Einrichtung nach den Ansprüchen 7 und 8, dadurch gekennzeichnet, daß der Grad der Schrägführung der Kabel (50,51,52) von den Durchmessern der geführten Kabel (50,51,52) bestimmt ist.
